# EUROPÄISCHE PATENTSCHRIFT

(11) **EP 2 495 837 B1**
(45) Veröffentlichungstag und Bekanntmachung des Hinweises auf die Patenterteilung: **18.12.2019**
(21) Anmeldenummer: 12002656.2
(22) Anmeldetag: 06.04.2006
(51) Int. Cl.: H02K 5/22, H02J 50/10, H02K 11/00, H02K 11/33

(54) **Verbraucher und System mit induktiver Energieübertragung**
Consumer and system with inductive energy transfer
Consommateur et système avec transmission d'énergie inductive

(30) Priorität: 10.05.2005 DE 102005022367
(43) Veröffentlichungstag der Anmeldung: 05.09.2012
(62) Teilanmeldung aus: 06724081.2
(73) Patentinhaber: SEW-EURODRIVE GmbH & Co. KG, 76646 Bruchsal (DE)
(72) Erfinder: Schmidt, Josef, 76676 Graben-Neudorf (DE)

(56) Entgegenhaltungen:
- WO-A-2005/020405
- WO-A1-99/50806
- DE-A1- 10 112 892
- US-A- 5 293 308
- US-B1- 6 310 291

## Beschreibung

Die Erfindung betrifft einen Antrieb.

In industriellen Anlagen ist bekannt, elektrische Verbraucher, wie beispielsweise elektronische Geräte, Beleuchtungsvorrichtungen, Antriebe, Maschinen und dergleichen, aus einem Netz galvanisch zu versorgen, insbesondere mit Wechselstrom von 50 oder 60 Hz. Dazu sind die Verbraucher meist mittels kostspieliger Steckverbinder mechanisch angeschlossen und elektrisch verbunden. Außerdem weist eine solche Anlage oder Maschine meist für jeden Antrieb ein T-Stück als Energieabzweigung auf. Diese T-Stücke sind aufwendig zu installieren und kostspielig, besonderes wenn sie in hoher Schutzart für den Nassbereich oder gar den aseptischen Bereich einsetzbar sein müssen. Diese T-Stücke werden auch als Verteilerkästen bezeichnet und umfassen oft auch weitere Vorrichtungsteile, wie beispielsweise Notaus-Schalter. Somit sind sie aufwendig und kostspielig, insbesondere auch hinsichtlich der Installation.

Aus der DE 103 60 604 ist ein System und ein Verbraucher zur berührungslosen Versorgung bekannt.

Aus der WO 2005/020405 A ist eine Anordnung zur berührungslosen Energieübertragung bekannt.

Aus der US 5 293 308 A ist ein induktive Leistungsverteilungssystem bekannt.

Aus der US 5 319 291 B1 ist ein Verschlusssystem bekannt.

Aus der WO 99/50806 A1 ist ein Signalübertragungssystem für ein induktives Energieübertragungssystem bekannt.

Aus der DE 101 12 892 A1 ist eine Vorrichtung zur Übertragung von Daten innerhlab eines Systems zur berührungsfreien induktiven Energieübertragung bekannt.

Der Erfindung liegt daher die Aufgabe zugrunde, eine einfachere und kostengünstigere Verkabelung bei elektrischen Verbrauchern und Anlagen zu schaffen.

Erfindungsgemäß wird die Aufgabe bei dem elektrischen Verbraucher nach den in Anspruch 1 und bei der System nach den in Anspruch 10 angegebenen Merkmalen gelöst.

Wesentliche Merkmale der Erfindung bei der Vorrichtung und ein Verfahren sind, dass er Mittel zu seiner induktiven Versorgung umfasst,
wobei die Mittel ein Einschiebeteil umfassen, nach dessen Einschieben in den Verbraucher dessen Versorgung vorgesehen ist.

Somit ist eine schnelle Verbindung und Trennung mit dem versorgenden System möglich. Es müssen keine elektrischen freiliegenden Kontakte verwendet werden. Außerdem ist das Einschiebeteil aus Kunststoff kostengünstig herstellbar.

Von Vorteil ist dabei, dass der Verbraucher dicht und in hoher Schutzart in kostengünstiger Weise ausführbar ist. Die berührungslose Versorgung des Verbrauchers ermöglicht nämlich das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist er somit in Nassbereichen und aseptischen Bereichen einsetzbar. Die Zeit, welche für das Verkabeln notwendig ist, ist mit der Erfindung reduzierbar. Weiterhin werden Ableitströme, die bei konventioneller Steckerverkabelung auftreten, verhindert, so dass eine verbesserte elektromagnetische Verträglichkeit entsteht.

Weiter ist von Vorteil, dass die Einspeisung zu den Verbrauchern potentialfrei ist und die sonst in Anlagen vorhandene Potentialverschleppung sowie Funkentstörmittel bei Trennschaltern entfallen. Außerdem ist eine Blindleistungskompensation, insbesondere im Verbraucher, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind. Trennschalter sind entbehrlich, da ein Auftrennen durch ein Herausziehen des Primärleiters ersetzbar ist.

Bei einer vorteilhaften Ausgestaltung ist an das Einschiebeteil ein Schloss, umfassend Schlossbügel, formschlüssig verbindbar, wobei für das Lösen des Schlosses vom Einschiebeteil ein Schlüssel notwendig ist. Insbesondere ist eine Bohrung vorgesehen für den Schlossbügel des Schlosses. Vorteiligerweise ist nur ein beabsichtigtes und befugtes Lösen der Versorgung vom Verbraucher ausführbar.

Bei einer vorteilhaften Ausgestaltung ist das Einschiebeteil mit dem Verbraucher mit derartigen Mitteln verbindbar, dass unter die Verwendung eines Werkzeuges notwendig ist. Vorteiligerweise ist nur ein beabsichtigtes Lösen der Versorgung vom Verbraucher ausführbar.

Bei einer vorteilhaften Ausgestaltung weist der Verbraucher ein Gehäuseteil auf, das gehäusebildende Funktion für einen Elektromotor, ein Getriebe und einen den Elektromotor versorgende elektronische Schaltung, umfassen Frequenzumrichter, aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist. Vorteiligerweise ist somit ein Gehäuseteil geformt, das mehrere Funktionen vereint, also Gehäuse ist für verschiedene Komponenten des Antriebs und Aufnahme für die Versorgung.

Bei einer vorteilhaften Ausgestaltung ist ein Primärleiter derart am Verbraucher vorgesehen, dass eine induktive Kopplung mit einer vom Verbraucher umfassten Sekundärwicklung vorsehbar ist. Von Vorteil ist dabei, dass kein Steckverbinder notwendig ist und somit die Verkabelung schnell und einfach ausführbar ist. Außerdem sind Kosten einsparbar. Da keine Kabelkonfektionierung notwendig ist, kann die Installation auch durch nicht elektrotechnisch geschultes Personal durchgeführt werden.

Bei einer vorteilhaften Ausgestaltung ist mindestens ein Primärleiter in einer Vertiefung oder einem Kabelkanal des Verbrauchers vorgesehen. Von Vorteil ist dabei, dass die Kabelverlegung sehr schnell und einfach ausführbar ist, nämlich durch bloßes Hineindrücken in die Vertiefung oder den Kabelkanal. Zusätzlich ist ein Vergießen mit einer Vergussmasse vorteilig ausführbar.

Bei einer vorteilhaften Ausgestaltung ist mindestens eine Sekundärwicklung um einen U-förmigen und/oder E-förmigen Kern gewickelt oder in einen sehr flach ausgeführten Empfängerkopf integriert. Von Vorteil ist dabei, dass je nach verwendetem Verfahren, gewünschter Leistung und gewünschtem Wirkungsgrad die Ausführung wählbar ist.

Bei einer vorteilhaften Ausgestaltung sind die Primärleiter mindestens teilweise vergossen und/oder mittels eines Deckels geschützt. Von Vorteil ist dabei, dass eine besonders hohe Schutzart erreichbar ist und keine verschmutzungsgefährdeten Hohlräume entstehen. Derartige in Deckel bzw. Halter vergossene Leiterstücke können an einer glatten Gehäuseoberfläche des Verbrauchers montiert werden, so dass keine Vertiefung bzw. kein Kanal am Verbraucher vorgesehen werden muss.

Bei einer vorteilhaften Ausgestaltung ist der Verbraucher dicht, an der äußeren Oberfläche glatt und/oder in hoher Schutzart ausgeführt. Von Vorteil ist dabei, dass der Verbraucher insbesondere zum Einsatz in Nassbereichen und/oder aseptischen Bereichen vorsehbar ist.

Bei einer vorteilhaften Ausgestaltung umfasst der Verbraucher keinen Steckverbinder oder andere elektrische Anschlussvorrichtungen an seinem Äußeren. Von Vorteil ist dabei wiederum, dass der Verbraucher in einfacher Weise dicht und in hoher Schutzart ausführbar ist.

Weitere Vorteile ergeben sich aus den Unteransprüchen.

### Bezugszeichenliste

1 Hinleiter des Primärleitersystems
2 Rückleiter des Primärleitersystems
3 Einschiebeteil
4 Umrichtergetriebemotor als Verbraucher
5 Erhebungen
6 Bohrung
7 Bohrung

Die Erfindung wird nun anhand von Abbildungen näher erläutert:

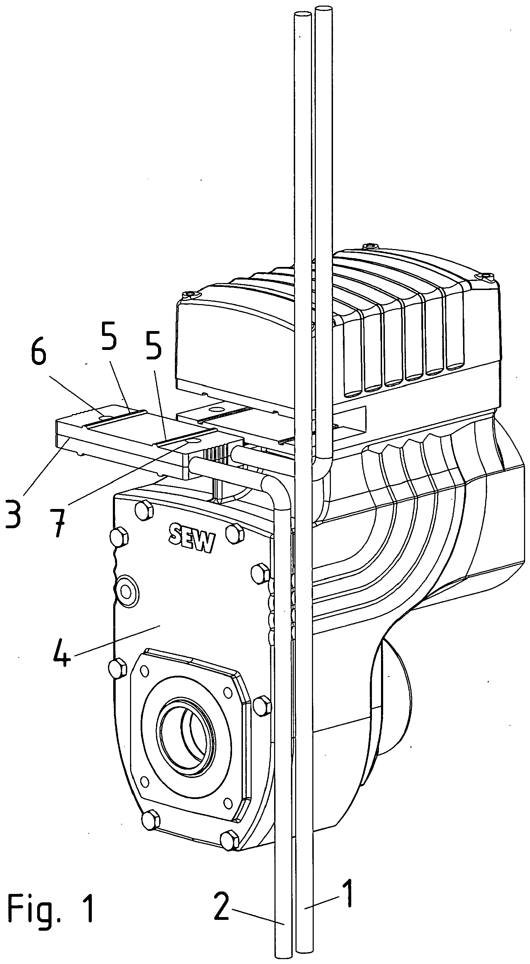

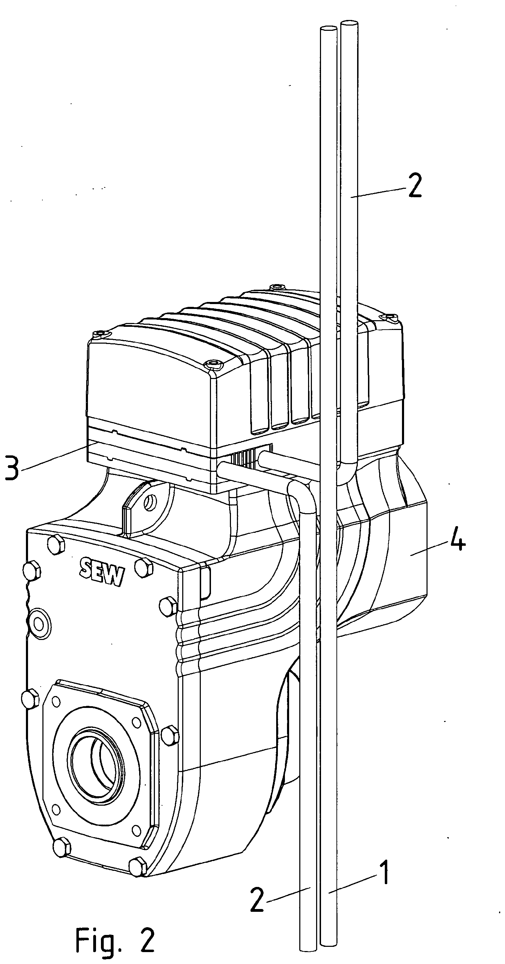

In der Figur 1 ist ein erfindungsgemäßer Verbraucher symbolisch gezeigt, wobei der Verbraucher von der Versorgung abgetrennt ist. In der Figur 2 ist ein erfindungsgemäßer Verbraucher symbolisch gezeigt mit Versorgung.

Das Primärleitersystem umfasst einen Hinleiter 1 und einen Rückleiter 2, in welche ein mittelfrequenter Wechselstrom eingeprägt wird.
Der als Umrichtergetriebemotor ausgeführte Verbraucher 4 umfasst eine Sekundärspule, die nach Einschieben des Einschiebeteils 3 induktiv gekoppelt ist an das Primärleitersystem.

Das Einschiebeteil 3 weist Erhebungen 5 zur formschlüssigen Verbindung mit dem Verbraucher 4 oder zumindest als Führung beim Einschieben des Einschiebeteils 3 auf. Bohrungen 6, 7 sind des Weiteren vorgesehen.

Mittels einer Schraube, die durch die Bohrung 6 steckbar ist und auch in einer Bohrung des Verbrauchers einbringbar ist, kann das Einschiebeteil 3 mit dem Verbraucher 4 formschlüssig gekoppelt werden. Dabei ist ein Werkzeug notwendig und das Lösen der Verbindung ist nur von Bedienern mit Werkzeug ausführbar.

In der Bohrung 7 ist bei aus dem Verbraucher herausgenommenem Einschiebeteil 3 ein Vorhängeschloss mit seinem Schlossbügel einhängbar. Auf diese Weise ist das WiederEinschieben des Einschiebeteils in den Verbraucher blockierbar.

Somit kann nur ein befugter Bediener mit Schlüssel für das Schloss des Vorhängeschlosses die elektrische Versorgung des Verbrauchers wiederherstellen.

Der Verbraucher weist einen U-Kern oder einen E-förmigen Kern auf, der die Sekundärspule an das Primeleitersystem verbessert ankoppelt.

## Patentansprüche

1. Als Umrichtergetriebemotor ausgeführter Antrieb (4), wobei der Antrieb zumindest einen Elektromotor und eine elektronische Schaltung zur Versorgung des Elektromotors umfasst,
wobei der Antrieb Mittel zu seiner induktiven Versorgung umfasst, wobei die Mittel ein Einschiebeteil (3) umfassen, das nach dessen Einschieben in den Antrieb für dessen Versorgung vorgesehen ist,
wobei die Mittel eine elektronische Schaltung zur Versorgung von Teilen des Antriebs umfassen
und Mittel zur Informationsübertragung vorgesehen sind, indem der Antrieb derart gestaltet ist, dass Information durch Aufmodulation von höherfrequenten Signalen auf den Primärleiter übertragbar ist,
wobei an das Einschiebeteil ein Schloss, umfassend Schlossbügel, formschlüssig verbindbar ist, wobei für das Lösen des Schlosses vom Einschiebeteil ein Schlüssel notwendig ist,
wobei das Einschiebeteil formschlüssig oder mit Klemmverbindung mit dem Antrieb verbindbar ist,
wobei der Antrieb ein Gehäuseteil aufweist, das gehäusebildende Funktion für einen Elektromotor, ein Getriebe und einen den Elektromotor versorgende elektronische Schaltung, umfassend einen Frequenzumrichter aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist,
wobei das Einschiebeteil Erhebungen aufweist, welche das Einschiebeteil beim Einschieben des Einschiebeteils in den Antrieb führen.

2. Antrieb nach Anspruch 1,
**dadurch gekennzeichnet, dass**
eine Bohrung vorgesehen ist für den Schlossbügel des Schlosses.

3. Antrieb nach mindestens einem der vorangegangenen Ansprüche,
**dadurch gekennzeichnet, dass**
das Einschiebeteil mit dem Antrieb mit derartigen Mitteln verbindbar ist, dass die Verwendung eines Werkzeuges notwendig ist.

4. Antrieb nach mindestens einem der vorangegangenen Ansprüche,
**dadurch gekennzeichnet, dass**
ein Primärleiter (1, 2) derart am Antrieb vorgesehen ist, dass eine induktive Kopplung mit einer vom Antrieb umfassten Sekundärwicklung vorsehbar ist.

5. Antrieb nach mindestens einem der vorangegangenen Ansprüche,
**dadurch gekennzeichnet, dass**
mindestens ein Primärleiter in einer Vertiefung oder einem Kabelkanal des Antriebs vorgesehen ist.

6. Antrieb nach mindestens einem der vorangegangenen Ansprüche,
**dadurch gekennzeichnet, dass**
mindestens eine Sekundärwicklung um einen U-förmigen und/oder E-förmigen Kern oder in einem flachen Kern gewickelt ist.

7. Antrieb nach mindestens einem der vorangegangenen Ansprüche,
**dadurch gekennzeichnet, dass**
die Primärleiter mindestens teilweise vergossen und/oder mittels eines Deckels gehalten werden.

8. Antrieb nach mindestens einem der vorangegangenen Ansprüche,
**dadurch gekennzeichnet, dass**
der Antrieb dicht, an der äußeren Oberfläche glatt und/oder in hoher Schutzart ausgeführt ist, insbesondere zum Einsatz in Nassbereichen und/oder aseptischen Bereichen.

9. Antrieb nach mindestens einem der vorangegangenen Ansprüche,
**dadurch gekennzeichnet, dass**
der Antrieb keinen Steckverbinder oder andere elektrische Anschlussvorrichtungen an seinem Äußeren umfasst.

10. System,
**dadurch gekennzeichnet, dass**
ein oder mehrere Antriebe (4) nach Anspruch 1 bis 9 berührungslos versorgt sind mittels jeweiliger induktiver Kopplung an einen oder mehrere Primärleiter.

11. System nach mindestens einem der vorangegangenen Ansprüche,
**dadurch gekennzeichnet, dass**
der Antrieb derart ausgeführt ist, dass der Primärleiter vom Antrieb abnehmbar ist.

12. System nach mindestens einem der vorangegangenen Ansprüche,
**dadurch gekennzeichnet, dass**
der Primärleiter aus einem AC/AC-Wandler, also Wechselstrom-Wechselstrom-Wandler, versorgt ist.

13. System nach mindestens einem der vorangegangenen Ansprüche,
**dadurch gekennzeichnet, dass**
der AC/AC-Wandler aus dem elektrischen Netz, insbesondere mit 50 oder 60 Hz, versorgt ist.

14. System nach mindestens einem der vorangegangenen Ansprüche,
**dadurch gekennzeichnet, dass**
mindestens ein Primärleiter kraftschlüssig oder formschlüssig im Antrieb gehalten ist.

15. System nach mindestens einem der vorangegangenen Ansprüche,
**dadurch gekennzeichnet, dass**
mindestens ein Primärleiter im Antrieb vergossen ist.

16. System nach mindestens einem der vorangegangenen Ansprüche,
**dadurch gekennzeichnet, dass**
Antrieb auf einem bewegbaren Teil, insbesondere Drehtisch oder Lineartrieb, angeordnet sind.

17. System nach mindestens einem der vorangegangenen Ansprüche,
**dadurch gekennzeichnet, dass**
das Teil drehbar gelagert oder linear bewegbar ist.

18. System nach mindestens einem der vorangegangenen Ansprüche,
**dadurch gekennzeichnet, dass**
der Primärleiter mit mittelfrequentem Wechselstrom beaufschlagt ist.

19. System nach mindestens einem der vorangegangenen Ansprüche,
**dadurch gekennzeichnet, dass**
der Primärleiter mit mittelfrequentem Wechselstrom von etwa 10 bis 50 kHz, insbesondere von etwa 20 kHz, beaufschlagt ist.

20. System nach mindestens einem der vorangegangenen Ansprüche,
**dadurch gekennzeichnet, dass**
der Primärleiter die Antrieb seriell versorgt.

21. System nach mindestens einem der vorangegangenen Ansprüche,
**dadurch gekennzeichnet, dass**
der Primärleiter über stationäre, mindestens eine Spulenwicklung umfassende Spulenkerne berührungslos oder über Schleifleitung mit Energie versorgt ist.

22. System nach mindestens einem der vorangegangenen Ansprüche,
**dadurch gekennzeichnet, dass**
der Primärleiter als geschlossene Schleife verlegt ist.

23. System nach mindestens einem der vorangegangenen Ansprüche,
**dadurch gekennzeichnet, dass**
Primärleiter und Antrieb galvanisch entkoppelt sind.

## Claims

1. A drive (4) in the form of a converter-fed geared motor,
wherein the drive comprises at least an electric motor and an electronic circuit for supplying the electric motor,
wherein the drive comprises means for inductively supplying it,
wherein the means comprise an insertion part (3) which once it has been inserted in the drive is intended for supplying the latter,
wherein the means comprise an electronic circuit for supplying parts of the drive
and means for transmitting information are provided, in that the drive is configured such that information can be transmitted by modulating higher-frequency signals onto the primary conductor,
wherein a lock, comprising lock shackle, can be connected in a positively locking manner to the insertion part, with a key being necessary for releasing the lock from the insertion part,
wherein the insertion part can be connected in a positively locking manner or with a clamping connection to the drive,
wherein the drive has a housing part which has a housing-forming function for an electric motor, a gear unit and an electronic circuit supplying the electric motor, comprising a frequency converter, wherein the rotor shaft of the electric motor and output shaft of the gear unit are mounted in the housing part and the insertion part can be inserted into a receiving region of the housing part,
wherein the insertion part has elevations which guide the insertion part upon insertion of the insertion part into the drive.

2. A drive according to Claim 1,
**characterised in that**
a bore is provided for the lock shackle of the lock.

3. A drive according to at least one of the preceding claims,
**characterised in that**
the insertion part can be connected to the drive with such means that the use of a tool is necessary.

4. A drive according to at least one of the preceding claims,
**characterised in that**
a primary conductor (1, 2) is provided on the drive in such a manner that an inductive coupling with a secondary winding comprised by the drive can be provided.

5. A drive according to at least one of the preceding claims,
**characterised in that**
at least one primary conductor is provided in a depression or a cable channel of the drive.

6. A drive according to at least one of the preceding claims,
**characterised in that**
at least one secondary winding is wound around a U-shaped and/or E-shaped core or in a flat core.

7. A drive according to at least one of the preceding claims,
**characterised in that**
the primary conductors are at least partially encapsulated and/or held by means of a cover.

8. A drive according to at least one of the preceding claims,
**characterised in that**
the drive is embodied to be impervious, smooth on the outer surface and/or with a high degree of protection, in particular for use in wet areas and/or aseptic areas.

9. A drive according to at least one of the preceding claims,
**characterised in that**
the drive does not comprise a plug-in connector or other electrical connection devices on its outside.

10. A system,
**characterised in that**
one or more drives (4) according to Claim 1 to 9 are supplied in contactless manner by means of respective inductive coupling to one or more primary conductors.

11. A system according to at least one of the preceding claims,
**characterised in that**
the drive is embodied such that the primary conductor can be removed from the drive.

12. A system according to at least one of the preceding claims,
**characterised in that**
the primary conductor is supplied from an AC/AC converter, i.e. alternating-current/alternating-current converter.

13. A system according to at least one of the preceding claims,
**characterised in that**
the AC/AC converter is supplied, in particular with 50 or 60 Hz, from the electrical power system.

14. A system according to at least one of the preceding claims,
**characterised in that**
at least one primary conductor is held in the drive in a non-positively locking manner or in a positively locking manner.

15. A system according to at least one of the preceding claims,
**characterised in that**
at least one primary conductor is encapsulated in the drive.

16. A system according to at least one of the preceding claims,
**characterised in that**
drive are arranged on a movable part, in particular turntable or linear drive [sic].

17. A system according to at least one of the preceding claims,
**characterised in that**
the part is rotatably mounted or linearly movable.

18. A system according to at least one of the preceding claims,
**characterised in that**
the primary conductor is fed with medium-frequency alternating current.

19. A system according to at least one of the preceding claims,
**characterised in that**
the primary conductor is fed with medium-frequency alternating current of approximately 10 to 50 kHz, in particular of approximately 20 kHz.

20. A system according to at least one of the preceding claims,
**characterised in that**
the primary conductor supplies the drive in series.

21. A system according to at least one of the preceding claims,
**characterised in that**
the primary conductor is supplied with power by way of stationary coil cores comprising at least one coil winding in contactless manner or by way of a conductor line.

22. A system according to at least one of the preceding claims,
**characterised in that**
the primary conductor is laid as a closed loop.

23. A system according to at least one of the preceding claims,
**characterised in that**
the primary conductor and drive are galvanically isolated.

## Revendications

1. Entraînement (4) réalisé sous la forme d'un motoréducteur à variateur,
l'entraînement comprenant au moins un moteur électrique et un circuit électronique pour alimenter le moteur électrique,
l'entraînement comprenant des moyens pour son alimentation par induction,
les moyens comprenant une partie insérable (3) qui, après avoir été insérée dans l'entraînement, est prévue pour son alimentation,
les moyens comprenant un circuit électronique pour alimenter des parties de l'entraînement
et des moyens pour transmettre des informations étant prévus, l'entraînement étant conçu de telle sorte que des informations peuvent être transmises par modulation de signaux à haute fréquence sur le conducteur primaire,
un cadenas, comprenant un anneau de cadenas, pouvant être relié par complémentarité de forme à la partie insérable, une clé étant nécessaire pour libérer le cadenas de la partie insérable,
la partie insérable pouvant être reliée à l'entraînement par complémentarité de forme ou par serrage,
l'entraînement présentant une partie boîtier qui a une fonction de boîtier pour un moteur électrique, une réducteur et un circuit électronique alimentant le moteur électrique, comprenant un variateur de fréquence, l'arbre de rotor du moteur électrique et l'arbre de sortie du réducteur étant montés dans la partie boîtier et la partie insérable pouvant être insérée dans une zone de réception de la partie boîtier,
la partie insérable présentant des élévations qui guident la partie insérable lors de l'insertion de la partie insérable dans l'entraînement.

2. Entraînement selon la revendication 1,
**caractérisé en ce**
**qu'**un alésage est prévu pour l'anneau de cadenas du cadenas.

3. Entraînement selon au moins l'une des revendications précédentes,
**caractérisé en ce**
**que** la partie insérable peut être reliée à l'entraînement par des moyens tels que l'utilisation d'un outil est nécessaire.

4. Entraînement selon au moins l'une des revendications précédentes,
**caractérisé en ce**
**qu'**un conducteur primaire (1, 2) est prévu sur l'entraînement, de telle sorte qu'un couplage inductif avec un enroulement secondaire inclus par l'entraînement peut être prévu.

5. Entraînement selon au moins l'une des revendications précédentes,
**caractérisé en ce**
**qu'**au moins un conducteur primaire est prévu dans un renfoncement ou un conduit de câbles de l'entraînement.

6. Entraînement selon au moins l'une des revendications précédentes,
**caractérisé en ce**
**qu'**au moins un enroulement secondaire est enroulé autour d'un noyau en U et/ou en E ou dans un noyau plat.

7. Entraînement selon au moins l'une des revendications précédentes,
**caractérisé en ce**
**que** les conducteurs primaires sont au moins partiellement scellés et/ou maintenus au moyen d'un couvercle.

8. Entraînement selon au moins l'une des revendications précédentes,
**caractérisé en ce**
**que** l'entraînement est réalisé étanche, avec une surface extérieure lisse et/ou avec un degré de protection élevé, en particulier pour une utilisation dans des zones humides et/ou aseptiques.

9. Entraînement selon au moins l'une des revendications précédentes,
**caractérisé en ce**
**que** l'entraînement ne comprend pas de connecteurs ou d'autres dispositifs de connexion électrique à l'extérieur de celui-ci.

10. Système,
**caractérisé en ce**
**qu'**un ou plusieurs entraînements (4) selon les revendications 1 à 9 sont alimentés sans contact par couplage inductif respectif à un ou plusieurs conducteurs primaires.

11. Système selon au moins l'une des revendications précédentes,
**caractérisé en ce**
**que** l'entraînement est réalisé de telle sorte que le conducteur primaire peut être retiré de l'entraînement.

12. Système selon au moins l'une des revendications précédentes,
**caractérisé en ce**
**que** le conducteur primaire est alimenté par un convertisseur AC/AC, c'est-à-dire un convertisseur courant alternatif/courant alternatif.

13. Système selon au moins l'une des revendications précédentes,
**caractérisé en ce**
**que** le convertisseur AC/AC est alimenté par le réseau électrique, en particulier à 50 ou 60 Hz.

14. Système selon au moins l'une des revendications précédentes,
**caractérisé en ce**
**qu'**au moins un conducteur primaire est maintenu dans l'entraînement par force ou par complémentarité de forme.

15. Système selon au moins l'une des revendications précédentes,
**caractérisé en ce**
**qu'**au moins un conducteur primaire est scellé dans l'entraînement.

16. Système selon au moins l'une des revendications précédentes,
**caractérisé en ce**
**que** l'entraînement est disposé sur une partie mobile, en particulier un plateau rotatif ou un entraînement linéaire.

17. Système selon au moins l'une des revendications précédentes,
**caractérisé en ce**
**que** la partie est montée rotative ou mobile linéairement.

18. Système selon au moins l'une des revendications précédentes,
**caractérisé en ce**
**que** le conducteur primaire est soumis à un courant alternatif à moyenne fréquence.

19. Système selon au moins l'une des revendications précédentes,
**caractérisé en ce**
**que** le conducteur primaire est soumis à un courant alternatif à moyenne fréquence d'environ 10 à 50 kHz, en particulier d'environ 20 kHz.

20. Système selon au moins l'une des revendications précédentes,
**caractérisé en ce**
**que** le conducteur primaire alimente l'entraînement en série.

21. Système selon au moins l'une des revendications précédentes,
**caractérisé en ce**
**que** le conducteur primaire est alimenté en énergie sans contact par l'intermédiaire de noyaux de bobines fixes comprenant au moins un enroulement de bobine ou par l'intermédiaire d'une ligne de contact.

22. Système selon au moins l'une des revendications précédentes,
**caractérisé en ce**
**que** le conducteur primaire est posé sous la forme d'une boucle fermée.

23. Système selon au moins l'une des revendications précédentes,
**caractérisé en ce**
**que** le conducteur primaire et l'entraînement sont découplés galvaniquement.
